# FASCICULE DE BREVET EUROPEEN

(11) **EP 4 062 403 B1**
(45) Date de publication et mention de la délivrance du brevet: **29.03.2023**
(21) Numéro de dépôt: 20781602.6
(22) Date de dépôt: 07.10.2020
(51) Int. Cl.: G10L 15/28, G06F 3/16, G10L 15/32, G10L 15/08, G10L 15/22

(54) **ASSISTANT VOCAL ECONOME EN RESSOURCE DE CALCUL**
COMPUTERRESSOURCENSPARENDER SPRACHASSISTENT
COMPUTING RESOURCE-SAVING VOICE ASSISTANT

(30) Priorité: 18.11.2019 FR 1912847
(43) Date de publication de la demande: 28.09.2022
(73) Titulaire: SAGEMCOM BROADBAND SAS, 92500 Rueil-Malmaison (FR)
(72) Inventeur: BOUCHON, Cédric, 92500 RUEIL MALMAISON (FR); BERGER, Jérôme, 92500 RUEIL MALMAISON (FR)
(74) Mandataire: Lavialle, Bruno François Stéphane
(86) Numéro de dépôt international: PCT/EP2020/078176
(87) Numéro de publication internationale: WO 2021/099024

(56) Documents cités:
- US-A1- 2015 370 531
- US-A1- 2016 042 748

## Description

La présente invention concerne le domaine de l'informatique.

### ARRIERE PLAN DE L'INVENTION

Il est connu des assistants vocaux, par exemple dans US 2016/042748 A1, capables de reconnaître plusieurs mots-clés et d'effectuer différentes en action selon le mot-clé reconnu. Un assistant vocal est un dispositif électronique comprenant une unité de traitement informatique reliée à un microphone et à un ou plusieurs périphériques comme un décodeur de télévision, un serveur domotique, et une passerelle Internet permettant d'accéder directement à des services proposés sur ce réseau tels que : la fourniture à domicile de produits divers et variés, alimentaires ou non ; la réalisation d'appels téléphoniques (VoIP) ; la fourniture d'informations... Pour déclencher une action, l'utilisateur doit simplement prononcer le mot-clé associé au périphérique et une requête correspondant à l'utilisation souhaitée du périphérique en question.

Pour gérer l'utilisation de plusieurs mots-clés, l'unité de traitement informatique peut mettre en oeuvre :
- plusieurs détecteurs associés chacun à un mot-clé ; ou
- un détecteur multi-étage dans lequel un premier étage détecte si un mot-clé est présent dans le signal fourni par le microphone et un deuxième étage agencé pour identifier le mot-clé et le périphérique qui y est associé.

La première solution assure une qualité de détection maximale, chaque détecteur n'étant paramétré que pour un mot-clé particulier. Cependant, ceci impose de conserver tous les détecteurs activés en permanence, ce qui est gourmand en ressource de calcul. En outre, il existe un risque que plusieurs détecteurs considèrent simultanément avoir détecté le mot-clé qui leur est associé et risque d'engendrer une confusion dans la sélection de l'action à exécuter.

La deuxième solution est moins gourmande en ressource de calcul puisque seul le premier étage est activé en permanence et un seul mot-clé est identifié par le deuxième étage. En revanche, la qualité de détection est plus faible qu'avec la première solution.

On continue néanmoins de rechercher des solutions qui soient économes en ressource de calcul en offrant une qualité suffisante de détection.

Or, il arrive que des périphériques ou services actionnés par des mots-clés ne soient pas disponibles notamment parce que les périphériques ne sont pas raccordés à l'unité de traitement ou parce que l'utilisateur ne bénéficie pas des droits pour accéder à un service. Quelle que soit la solution employée, l'unité de traitement cherche quand même à détecter ces mots-clés, impactant inutilement les ressources de calcul de l'unité de traitement informatique. De plus, lorsque l'unité informatique de traitement est raccordée à une unité de diffusion sonore et pilote celle-ci, l'unité de traitement informatique est agencée pour commander une baisse du volume sonore diffusé à chaque détection d'un mot-clé pour permettre une meilleure détection de la requête suivant le mot-clé. Ceci est parfaitement inutile si l'action associée au mot-clé n'est pas réalisable.

### OBJET DE L'INVENTION

L'invention a notamment pour but d'améliorer le fonctionnement des assistants vocaux.

### RESUME DE L'INVENTION

A cet effet, on prévoit, selon l'invention un assistant vocal comprenant une unité électronique de traitement ayant un port de raccordement à au moins un microphone et au moins un port de raccordement à des équipements distants, l'unité électronique de traitement comprenant des modules de détection unique de mot-clé à partir d'un signal audio fourni par le microphone à l'unité électronique de traitement et une unité de commande reliée aux modules de détection unique pour sélectionner des actions prédéterminées en fonction de signaux de détection fournis par les modules de détection unique et pour réaliser ces actions, le module de commande étant en outre agencé pour :
- détecter une faisabilité des actions,
- activer et désactiver les modules de détection unique en fonction de la faisabilité des actions.

Ainsi, chacun des modules de détection n'est activé que lorsqu'est réalisable l'action associée au mot-clé qu'il est agencé pour détecter. Seuls les modules de détection permettant le déclenchement d'une action faisable consomment dès lors des ressources de calcul, évitant un gaspillage de ces ressources.

L'invention a également pour objet un procédé de commande d'un assistant vocal qui est relié à des équipements distants et comprend une unité électronique de traitement comprenant des modules de détection unique de mot-clé dans un signal audio et une unité de commande reliée aux modules de détection unique. Le procédé comprend l'étape de sélectionner des actions prédéterminées en fonction de signaux de détection fournis par les modules de détection unique et pour réaliser ces actions. Le procédé comprend en outre les étapes de :
- détecter une faisabilité des actions,
- activer et désactiver les modules de détection unique en fonction de la faisabilité des actions.

L'invention concerne également un programme d'ordinateur mettant en oeuvre ce procédé et un support de stockage contenant un tel programme.

D'autres caractéristiques et avantages de l'invention ressortiront à la lecture de la description qui suit de modes de réalisation particuliers et non limitatifs de l'invention.

### BREVE DESCRIPTION DES DESSINS

Il sera fait référence aux dessins annexés, parmi lesquels :
[Fig. 1] la figure 1 est une vue schématique d'un assistant vocal selon un premier mode de réalisation ;
[Fig. 2] la figure 2 est une vue schématique d'un assistant vocal selon un deuxième mode de réalisation ;
[Fig. 3] la figure 3 illustre le procédé selon l'invention.

### DESCRIPTION DETAILLEE DE L'INVENTION

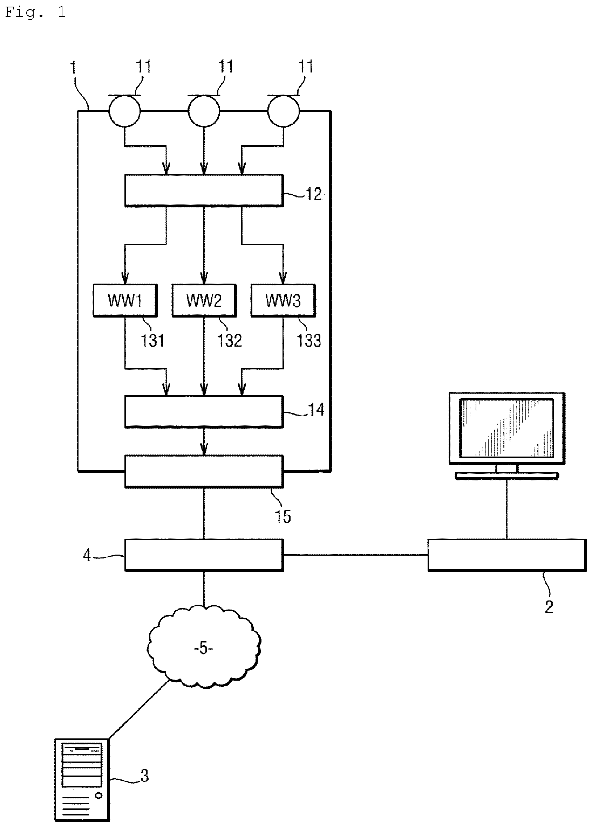

En référence à la figure 1, l'assistant vocal selon le premier mode de réalisation comprend une unité électronique de traitement, généralement désignée en 1, ayant des premiers ports de raccordement reliés chacun à un microphone 11 et au moins un deuxième port de raccordement relié à une interface réseau 15. L'interface réseau 15 est ici reliée à un routeur 4 relié d'une part à un décodeur de télévision 2 et au réseau Internet 5 auquel est également relié un serveur 3 proposant des services sur Internet.

L'unité électronique de traitement 1 comprend un processeur et une mémoire pour exécuter un programme informatique. L'unité électronique de traitement 1 est ainsi agencée pour permettre à un utilisateur de réaliser des actions prédéterminées en employant des mots-clés désignant chacune de ces actions, ces actions consistant par exemple à commander le décodeur de télévision 2 ou le serveur 3 pour accéder à l'un ou l'autre des services qu'il propose. L'utilisateur dispose à cette fin d'une liste mettant en relation chacune des actions prédéterminées avec un mot-clé. A des fins de simplification de l'exposé, il y a ici trois actions associées à trois mots-clés WW1, WW2, WW3. Il va de soi que ce nombre peut être inférieur ou supérieur. A cet effet, les premiers ports de raccordement sont également reliés à des entrées d'un module de traitement audio 12 agencé pour effectuer au moins un traitement des signaux audio fournis par les microphones 11. Le module de traitement audio 12 est ici plus précisément agencé pour :
- égaliser les signaux audio ;
- supprimer les bruits éventuellement présents dans les signaux audio ;
- annuler les échos éventuellement présents dans les signaux audio.

De préférence, le module de traitement audio 12 est également agencé pour traiter les signaux audio de manière à isoler un son provenant d'une direction particulière. Ceci permet de limiter l'influence du bruit de fond et fera ressortir les mots-clés.

Ces traitements audio, qui permettent de faciliter la détection de mots-clés dans les signaux audio, sont connus en eux-mêmes et ne seront pas plus détaillés ici.

Le module de traitement audio 12 a une sortie reliée à des modules de détection unique de mot-clé 131, 132, 133. Les modules de détection unique 131, 132, 133 mettent en oeuvre un même programme de détection avec des paramètres différents adaptés à chaque mot-clé. Des programmes de détection utilisables sont connus en eux-mêmes et comprennent par exemple : le programme « TrulyHandsFree » de la société Sensory, le programme « Snowboy » de la société Kitt.Al ou le logiciel libre « Mycroft Precise ». Chacun des modules de détection unique 131, 132, 133 est ainsi agencé pour :
- ne détecter qu'un seul mot-clé - respectivement WW1, WW2, WW3 - dans le signal audio traité qui lui est transmis par le module de traitement audio 12 ;
- émettre un signal de détection lorsqu'il détecte le mot-clé WW1, WW3, WW3 en question dans le signal audio.

Les modules de détection unique 131, 132, 133 ont une sortie reliée à une entrée d'un module de commande 14. Le module de commande 14 dispose en mémoire d'une table mettant en relation les actions prédéterminées et le signal de détection correspondant au mot-clé associé à chacune de actions prédéterminées et exécute l'action prédéterminée correspondant au signal de détection reçu. L'action en question comprendra généralement l'envoi, à un serveur distant, du signal audio dans lequel le mot-clé a été détecté (le module de traitement audio 12 étant relié directement au module de commande 14) de telle manière que le serveur distant interprète la requête qui suit le mot-clé et renvoie, éventuellement, au module de commande 14, une instruction qui soit exécutable par l'unité de commande 14 et qui corresponde à la requête suivant le mot-clé.

La table comprend également des priorités assignées aux actions de telle manière que, si deux des modules de détection unique 131, 132, 133 émettent simultanément un signal de détection, le module de commande 14 exécute celle des deux actions correspondant aux mots-clés ayant la priorité la plus élevée.

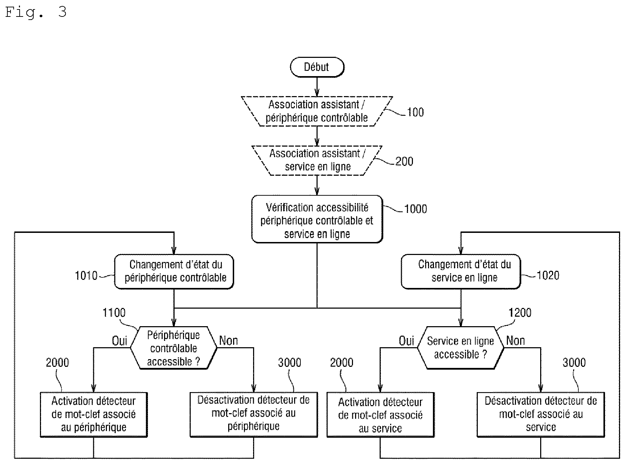

En référence également à la figure 3, le programme exécuté par le module de commande 14 est agencé pour :
- détecter une faisabilité des actions (étape 1000),
- activer (étape 2000) et désactiver (étape 3000) les modules de détection unique en fonction de la faisabilité des actions.

Plus précisément, le module de commande 14 est programmé pour :
- vérifier que les périphériques sont joignables à travers les ports de raccordement de l'unité électronique de traitement 1 (opération symbolisée en 1100) et considérer non faisable toute action devant être réalisée par l'un des périphériques si ce périphérique n'est pas joignable (périphérique non raccordé, non alimenté ou défaillant...) ;
- vérifier si les services proposés par le serveur 3 sont accessibles (opération symbolisée en 1200) et considérer non faisable toute action correspondant à l'un des services qui ne serait pas disponible ou toute action devant être réalisée par le serveur 3 si celui-ci n'est pas accessible (serveur défaillant, routeur défaillant, réseau surchargé entraînant des temps de réponse trop longs, service interrompu ou non paramétré, utilisateur ne disposant pas ou plus des droits d'accès au service...) .

De préférence, ces vérifications sont effectuées périodiquement selon une période prédéfinie ou au moment du déclenchement par l'opérateur d'une phase de test. Ces vérifications peuvent également être initiées par l'utilisateur lorsque celui-ci connecte ou déconnecte un périphérique entraînant un changement d'état de celui-ci (étape 1010) ou par un organisme délivrant un service en ligne et informant l'assistant vocal que ce service est ou n'est plus accessible pour l'utilisateur en question (étape 1020). On notera que, au moment de la mise en fonctionnement de l'assistant vocal, sont de préférence réalisées une opération d'association de l'assistant vocal avec les périphériques auxquels l'assistant vocal est destiné à être raccordés directement (étape 100 sur la figure 3) et une opération d'association de l'assistant vocal avec les services auxquels l'assistant vocal peut faire appel via le serveur (étape 200 sur la figure 3). Par exemple, si le module de commande 14 communique avec le décodeur de télévision 2, ou tout autre périphérique, et le serveur 3 par un protocole connecté, comme le protocole TCP, qui prévoit que des messages dits « keepalive » soient périodiquement échangés pour vérifier que la connexion entre eux est présente, le module de commande 14 considérera comme faisable une action devant être réalisée via ladite connexion si ledit message a été reçu depuis un laps de temps inférieur à un seuil prédéterminé. Si le décodeur de télévision 2, ou tout autre périphérique, communique avec le module de commande 14 via un protocole de type mDNS (ou « multicast DNS), le module de commande 14 écoute les messages envoyés par les périphériques pour annoncer leur disponibilité et considère comme faisable toute action devant être réalisée via un périphérique ayant annoncé sa disponibilité depuis un laps de temps inférieur à un seuil prédéterminé. Le module de commande 14 peut également considérer qu'une action normalement réalisée via le décodeur de télévision 2 ou le serveur 3 n'est pas faisable pour une durée prédéterminée après un nombre prédéterminé de tentatives infructueuses. Le module de commande peut ainsi périodiquement essayer d'établir une connexion avec chacun des périphériques et/ou serveurs via lesquels des actions doivent être réalisées.

Selon un exemple de fonctionnement, le mot-clé WW1 est une commande du décodeur 2, le mot-clé WW2 est une commande d'un premier service du serveur 3, le mot-clé WW3 est une commande d'un deuxième service du serveur 3. Le module de commande 14 est donc agencé pour :
- désactiver le module de détection unique 131 si le décodeur 2 n'est pas raccordé ou est défaillant ;
- désactiver le module de détection unique 132 si le premier service n'est pas disponible ;
- désactiver le module de détection unique 133 si le deuxième service n'est pas disponible ;
- d'une manière générale, désactiver tous les modules de détection unique correspondant à une action non faisable et au contraire activer tous les modules de détection unique correspondant à une action faisable.

Le deuxième mode de réalisation va maintenant être décrit. Les éléments identiques ou analogues à ceux précédemment décrits porteront, dans la suite de la description, la même référence numérique que ces derniers.

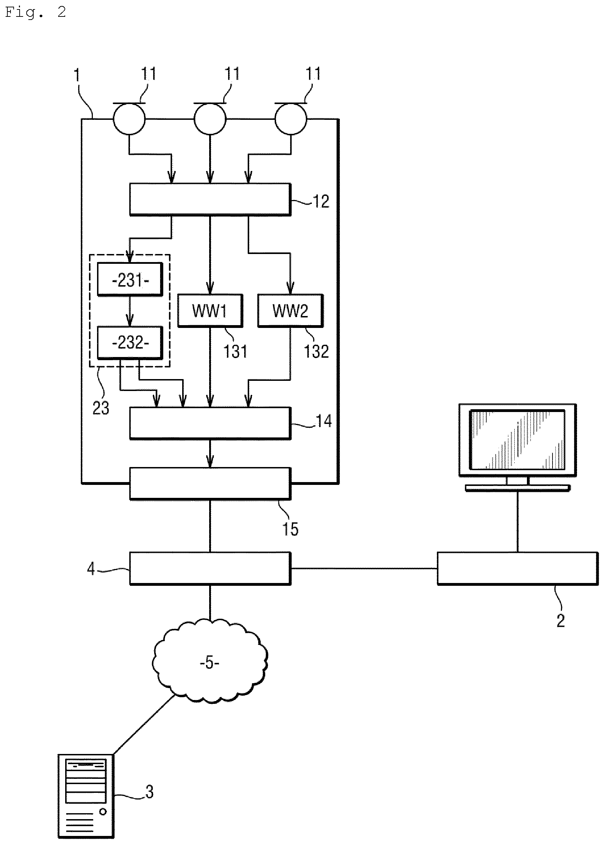

Dans le deuxième mode de réalisation représenté à la figure 2, l'unité informatique de traitement 1 est agencée pour déclencher deux actions en fonction de deux mots-clés WW1, WW2 et comprend deux modules de détection unique 131, 132 identiques à ceux précédemment décrits et un module de détection multiple de mots-clés 23 qui comprend de façon connue en elle-même un premier étage 231 pour détecter la présence d'un mot-clé dans un signal audio transmis par le module de traitement audio 12 et un deuxième étage 232 pour identifier le mot-clé en question et émettre vers le module de commande 14 un signal de détection correspondant au mot-clé identifié.

Dans le cas présent, le module de détection multiple 23 est agencé pour détecter les mots-clés WW1, WW2 de toutes les actions prédéterminées et il y a un module de détection unique 131, 132 par action prédéterminée. Le module de commande 14 est agencé pour :
- lorsque toutes les actions sont faisables, activer le module de détection multiple 23 et désactiver tous les modules de détection unique 131, 132 ;
- lorsqu'une seule des actions prédéterminées est faisable, activer le module de détection unique 131, 132 du mot-clé correspondant à l'action faisable et désactiver le module de détection multiple 23 ;
- lorsqu'aucune des actions n'est faisable, désactiver tous les modules de détection 23, 131, 132.

En variante, il est possible de prévoir qu'au moins l'une des actions prédéterminées soit associée à un mot-clé détectable uniquement par le module de détection multiple 23. Tel est le cas par exemple lorsqu'une action est ajoutée à la liste des actions prédéterminées et qu'aucun module de détection unique n'a été prévu pour le mot-clé correspondant à ladite action ajoutée. En revanche, le module de détection multiple 23 peut être paramétré pour détecter ce nouveau mot-clé. Le module de commande 14 est alors agencé pour :
- lorsque toutes les actions sont faisables, activer le module de détection multiple 23 et désactiver tous les modules de détection unique ;
- lorsqu'une partie seulement des actions est faisable, activer le ou les modules de détection unique du ou des mots-clés correspondant à la ou aux actions faisables et/ou le module de détection multiple si l'une des actions faisables est associée à un mot-clé détectable uniquement par le module de détection multiple ;
- lorsqu'aucune des actions n'est faisable, désactiver tous les modules de détection.

En variante encore, le module de commande peut être agencé pour, lorsqu'aucune des actions n'est faisable :
- activer le module de détection multiple 23 et désactiver tous les modules de détection unique 131, 132 ;
- émettre un signal d'erreur si un mot-clé est détecté par le module de détection multiple 23.

Le signal d'erreur est par exemple émis sous la forme d'un message sonore diffusé par un haut-parleur de l'assistant vocal ou un message visuel diffusé par un écran ou un voyant de l'assistant vocal.

Bien entendu, l'invention n'est pas limitée aux modes de réalisation décrits mais englobe toute variante entrant dans le champ de l'invention telle que définie par les revendications.

En particulier, la structure de l'unité électronique de traitement peut être différente de celle décrite.

L'unité électronique de traitement peut comprendre un unique processeur exécutant un programme informatique dont différentes parties forment les différents modules.

L'unité électronique de traitement peut également comprendre des modules physiques dédiées aux différentes fonctions, par exemple un processeur dédié au traitement du signal (DSP), un processeur dédié à la détection des mots-clés et un processeur dédié à la commande.

Les moyens de calcul de l'unité électronique de traitement peuvent comprendre un ou plusieurs processeurs, un ou plusieurs microcontrôleurs, un ou plusieurs FPGA...

Le programme informatique exécuté par l'unité de commande peut être installé en usine dans la mémoire de l'unité de commande, y être téléchargé depuis un port de raccordement externe une fois ce dernier raccordé à un réseau ou à un ordinateur, y être téléchargé depuis un support de données (comme une mémoire amovible de type clé USB ou carte mémoire) contenant ledit programme.

Le nombre de modules de détection unique et/ou multiple peut être modifié.

Par équipement distant, on entend un périphérique comme un décodeur de télévision, un serveur relié à Internet, un ordinateur relié à l'assistant vocal... Le nombre et le type d'équipements distants auxquels est connecté l'assistant vocal peuvent être différents de ceux décrits. Les équipements distants peuvent être raccordés à des ports distincts de l'unité électronique de traitement 1 ou à un routeur raccordé à un unique port de l'unité électronique de traitement 1.

L'assistant vocal peut être raccordé à un ou plusieurs microphones.

L'assistant vocal peut comprendre un ou plusieurs haut-parleurs pour diffuser un signal audio provenant du réseau auquel il est relié ou d'un terminal par exemple de type ordiphone auquel il est relié. Dans ce cas, le module de commande 14 est avantageusement agencé pour baisser temporairement le volume sonore après détection d'un mot-clé afin de faciliter la détection de la requête suivant le mot-clé.

L'unité électronique de traitement 1 peut être équipée d'un module de traitement audio effectuant une partie seulement des traitement mentionnés ou d'autres traitement. L'étape d'amélioration du signal audio peut donc comprendre tout ou partie des opérations listées (égalisation du signal audio, suppression du bruit et/ou d'écho, traitement de plusieurs signaux audio pour isoler un son provenant d'une direction particulière) ou d'autres traitements que ceux-ci. L'unité électronique de traitement 1 peut en outre être dépourvue de module de traitement audio. L'étape d'amélioration du signal audio est donc facultative.

Si deux modules de détection émettent simultanément un signal de détection et qu'aucune priorité n'est assignée aux actions correspondantes, le module de commande 14 peut être agencé pour émettre un signal d'erreur demandant par exemple de répéter le mot-clé.

Si deux modules de détection émettent simultanément un signal de détection et qu'aucune priorité n'est assignée aux actions correspondantes, les modules de détection peuvent être agencés pour émettre un score de confiance représentatif de la qualité avec laquelle un mot-clef a été détecté. Le module de commande 14 peut alors être agencé pour effectuer l'action correspondant au mot-clef dont le score de confiance est le plus élevé.

Lorsqu'un service a été configuré pour être normalement accessible depuis l'assistant vocal mais que ce service est temporairement inaccessible (perturbation du réseau par exemple), le module de commande 14 est avantageusement agencé pour ne pas désactiver le module de détection unique correspondant à une action utilisant ce service. Si deux mots-clés sont détectés simultanément dont le mot-clé correspondant à une action temporairement non faisable, le module de commande 14 exécute l'autre action si elle est faisable. Si plusieurs mots-clés ont été détectés et que deux de ces mots-clés correspondent à des actions faisables, le module de commande 14 exécute l'action de priorité la plus élevée parmi les actions faisables. Si au contraire aucune action n'est faisable, aucune action n'est exécutée et un signal d'erreur est émis.

Il est possible de désactiver un module de détection de mot-clé en augmentant son seuil de détection au point que la probabilité d'une détection devienne très faible sauf lorsque le mot-clé est énoncé très distinctement sans bruit de fond : le module de détection de mot-clé devient alors quasi-inopérant en condition normale.

Les modules de détection peuvent être des composants spécialisés dans la détection. Ils peuvent avoir plusieurs composants identiques avec des paramètres de fonctionnement différents adaptés au(x) mot(s)-clé(s) qu'ils sont en charge de détecter.

## Revendications

1. Assistant vocal comprenant une unité électronique de traitement (1) ayant un port de raccordement à au moins un microphone (11) et au moins un port de raccordement à des équipements distants (2, 4), l'unité électronique de traitement (1) comprenant des modules de détection unique de mot-clé (131, 132) à partir d'un signal audio fourni par le microphone (11) à l'unité électronique de traitement (1) et une unité de commande (14) reliée aux modules de détection unique (131, 132) pour sélectionner des actions prédéterminées en fonction de signaux de détection fournis par les modules de détection unique (131, 132) et pour réaliser ces actions, le module de commande (14) étant en outre agencé pour :
- détecter une faisabilité des actions,
- activer et désactiver les modules de détection unique (131, 132) en fonction de la faisabilité des actions.

2. Assistant vocal selon la revendication 1, dans lequel l'unité électronique de commande (14) comprend également un module de détection multiple de mots-clés (23).

3. Assistant vocal selon la revendication 2, dans lequel, si le module de détection multiple (23) est agencé pour détecter les mots-clés de toutes les actions prédéterminées et s'il y a un module de détection unique (131, 132) par action prédéterminée, le module de commande (14) est agencé pour :
- lorsque toutes les actions sont faisables, activer le module de détection multiple (23) et désactiver tous les modules de détection unique (131, 132) ;
- lorsqu'une partie seulement des actions est faisable, activer le ou les modules de détection unique (131, 132) du ou des mots-clés correspondant à la ou aux actions faisables et désactiver le module de détection multiple (23) .

4. Assistant vocal selon la revendication 2, dans lequel, si au moins l'une des actions prédéterminées est associée à un mot-clé détectable uniquement par le module de détection multiple (23), le module de commande (14) est agencé pour :
- lorsque toutes les actions sont faisables, activer le module de détection multiple (23) et désactiver tous les modules de détection unique (131, 132) ;
- lorsqu'une partie seulement des actions est faisable, activer le ou les modules de détection unique (131, 132) du ou des mots-clés correspondant à la ou aux actions faisables et/ou le module de détection multiple (23) si l'une des actions faisables est associée à un mot-clé détectable uniquement par le module de détection multiple (23).

5. Assistant vocal selon l'une quelconque des revendications 2 à 4, dans lequel, lorsqu'aucune des actions n'est faisable, le module de commande (14) est agencé pour désactiver tous les modules de détection (131, 132, 23).

6. Assistant vocal selon l'une quelconque des revendications 2 à 4, dans lequel, lorsqu'aucune des actions n'est faisable, le module de commande (14) est agencé pour :
- activer le module de détection multiple (23) et désactiver tous les modules de détection unique (131, 132) ;
- émettre un signal d'erreur si un mot-clé est détecté par le module de détection multiple (23).

7. Assistant vocal selon l'une quelconque des revendications précédentes, dans lequel le module de commande (14) est agencé pour vérifier que les équipements distants (2, 4) sont joignables à travers les ports de l'unité électronique de traitement (1) et considérer non faisable toute action devant être réalisée par un des équipements distants (2, 4) si ce périphérique n'est pas joignable.

8. Assistant vocal selon l'une quelconque des revendications précédentes, dans lequel l'un des ports de l'unité électronique de traitement (1) est reliée à un réseau (5) et le module de commande (14) est agencé pour :
- vérifier si un serveur (3) de ce réseau (5) est accessible ;
- considérer non faisable toute action devant être réalisée par ce serveur (5) si celui-ci n'est pas accessible.

9. Assistant vocal selon l'une quelconque des revendications précédentes, dans lequel l'unité électronique de traitement (1) comprend un module de traitement audio (12) entre le microphone (11) et les modules de détection (131, 132, 23).

10. Assistant vocal selon la revendication 7, dans lequel le module de traitement audio (12) est agencé pour égaliser le signal audio.

11. Assistant vocal selon la revendication 7, dans lequel le module de traitement audio (12) est agencé pour supprimer un bruit du signal audio.

12. Assistant vocal selon la revendication 7, dans lequel le module de traitement audio (12) est agencé pour annuler un écho du signal audio.

13. Assistant vocal selon la revendication 7, dans lequel, l'unité électronique de traitement (1) étant reliée à plusieurs microphones (11), le module de traitement audio (12) est agencé pour traiter les signaux audio pour isoler un son provenant d'une direction particulière.

14. Assistant vocal selon l'une quelconque des revendications précédentes, dans lequel les modules de détection unique (131, 132) ont une structure identique avec des paramètres de fonctionnement différents adaptés à chaque mot-clé.

15. Procédé de commande d'un assistant vocal qui est relié à des équipements distants (2, 4) et comprend une unité électronique de traitement (1) comprenant des modules de détection unique de mot-clé (131, 132) dans un signal audio et une unité de commande (14) reliée aux modules de détection unique (131, 132), le procédé comprenant l'étape de sélectionner des actions prédéterminées en fonction de signaux de détection fournis par les modules de détection unique (131, 132) et pour réaliser ces actions, le procédé comprenant en outre les étapes de :
- détecter une faisabilité des actions,
- activer et désactiver les modules de détection unique (131, 132) en fonction de la faisabilité des actions.

16. Procédé selon la revendication 15, dans lequel l'unité électronique de commande (14) comprend également un module de détection multiple de mots-clés (23) et le procédé comprend les étapes de :
- si le module de détection multiple (23) est agencé pour détecter les mots-clés de toutes les actions prédéterminées et s'il y a un module de détection unique (131, 132) par action prédéterminée :
. lorsque toutes les actions sont faisables, activer le module de détection multiple (23) et désactiver tous les modules de détection unique (131, 132) ;
. lorsqu'une partie seulement des actions est faisable, activer le ou les modules de détection unique (131, 132) du ou des mots-clés correspondant à la ou aux actions faisables et désactiver le module de détection multiple (23).
- si au moins l'une des actions prédéterminées est associée à un mot-clé détectable uniquement par le module de détection multiple (23), le module de commande (14) est agencé pour :
. lorsque toutes les actions sont faisables, activer le module de détection multiple (23) et désactiver tous les modules de détection unique (131, 132) ;
. lorsqu'une partie seulement des actions est faisable, activer le ou les modules de détection unique (131, 132) du ou des mots-clés correspondant à la ou aux actions faisables et/ou le module de détection multiple (23) si l'une des actions faisables est associée à un mot-clé détectable uniquement par le module de détection multiple (23).

17. Procédé selon la revendication 15 ou 16, comprenant l'étape de désactiver tous les modules de détection (131, 132, 23) lorsqu'aucune des actions n'est faisable.

18. Procédé selon la revendication 15 ou 16, comprenant, lorsqu'aucune des actions n'est faisable, les étapes de :
- activer le module de détection multiple (23) et désactiver tous les modules de détection unique (131, 132) ;
- émettre un signal d'erreur si un mot-clé est détecté par le module de détection multiple (23).

19. Procédé selon l'une quelconque des revendications 15 à 18, comprenant les étapes de vérifier que les équipements distants (2, 4) sont joignables par l'unité électronique de traitement (1) et considérer non faisable toute action devant être réalisée par un des équipements distants (2, 4) si ce périphérique n'est pas joignable.

20. Procédé selon l'une quelconque des revendications 15 à 19, dans lequel l'unité électronique de traitement (1) est reliée à un réseau (5) et le procédé comprend les étapes de :
- vérifier si un serveur (3) de ce réseau (5) est accessible ;
- considérer non faisable toute action devant être réalisée par ce serveur (5) si celui-ci n'est pas accessible.

21. Procédé selon l'une quelconque des revendications 15 à 20, comprenant, préalablement à la détection de mots-clés, une étape d'amélioration du signal audio.

22. Procédé selon la revendication 21, dans lequel l'étape d'amélioration du signal audio comprend au moins l'une des opérations suivantes :
- égaliser le signal audio ;
- supprimer un bruit du signal audio ;
- annuler un écho du signal audio ;
- traiter plusieurs signaux audio pour isoler un son provenant d'une direction particulière.

23. Programme d'ordinateur agencé pour être exécuté par une unité de traitement d'un assistant vocal, comprenant des instructions agencées pour mettre en oeuvre le procédé selon l'une quelconque des revendications 15 à 21.

24. Support de stockage contenant un programme d'ordinateur selon la revendication 23.

## Patentansprüche

1. Sprachassistent, umfassend eine elektronische Verarbeitungseinheit (1), die einen Anschlussport zum Anschluss an mindestens ein Mikrofon (11) und mindestens einen Anschlussport zum Anschluss an entfernte Ausrüstungen (2, 4) hat, wobei die elektronische Verarbeitungseinheit (1) Einzeldetektionsmodule (131, 132) zur Einzeldetektion von Schlüsselwörtern aus einem Audiosignal umfasst, das von dem Mikrofon (11) an die elektronische Verarbeitungseinheit (1) geliefert wird, sowie eine Steuereinheit (14), die mit den Einzeldetektionsmodulen (131, 132) verbunden ist, um vorbestimmte Aktionen in Abhängigkeit von Detektionssignalen auszuwählen, die von den Einzeldetektionsmodulen (131, 132) geliefert werden, und um diese Aktionen auszuführen, wobei das Steuermodul (14) ferner ausgebildet ist, um:
- eine Ausführbarkeit der Aktionen zu detektieren,
- die Einzeldetektionsmodule (131, 132) in Abhängigkeit von der Ausführbarkeit der Aktionen zu aktivieren und zu deaktivieren.

2. Sprachassistent nach Anspruch 1, bei dem die elektronische Steuereinheit (14) ferner ein Mehrfachdetektionsmodul (23) zur Mehrfachdetektion von Schlüsselwörtern umfasst.

3. Sprachassistent nach Anspruch 2, bei dem, falls das Mehrfachdetektionsmodul (23) ausgebildet ist, die Schlüsselwörter von allen vorbestimmten Aktionen zu detektieren, und falls es ein Einzeldetektionsmodul (131, 132) pro vorbestimmte Aktion gibt, das Steuermodul (14) ausgebildet ist, um:
- wenn alle Aktionen ausführbar sind, das Mehrfachdetektionsmodul (23) zu aktivieren und alle Einzeldetektionsmodule (131, 132) zu deaktivieren;
- wenn nur ein Teil der Aktionen ausführbar ist, das bzw. die Einzeldetektionsmodule (131, 132) zur Einzeldetektion des bzw. der Schlüsselwörter, die der bzw. den ausführbaren Aktionen entsprechen, zu aktivieren und das Mehrfachdetektionsmodul (23) zu deaktivieren.

4. Sprachassistent nach Anspruch 2, bei dem, falls mindestens eine der vorbestimmten Aktionen mit einem Schlüsselwort verbunden ist, das nur durch das Mehrfachdetektionsmodul (23) detektierbar ist, das Steuermodul (14) ausgebildet ist, um
- wenn alle Aktionen ausführbar sind, das Mehrfachdetektionsmodul (23) zu aktivieren und alle Einzeldetektionsmodule (131, 132) zu deaktivieren;
- wenn nur ein Teil der Aktionen ausführbar ist, das bzw. die Einzeldetektionsmodule (131, 132) zur Einzeldetektion des bzw. der Schlüsselwörter, die der bzw. den ausführbaren Aktionen entsprechen, und/oder das Mehrfachdetektionsmodul (23) zu aktivieren, falls eine der ausführbaren Aktionen mit einem Schlüsselwort verbunden ist, das nur von dem Mehrfachdetektionsmodul (23) detektierbar ist.

5. Sprachassistent nach einem der Ansprüche 2 bis 4, bei dem, wenn keine der Aktionen ausführbar ist, das Steuermodul (14) ausgebildet ist, alle Detektionsmodule (131, 132, 23) zu deaktivieren.

6. Sprachassistent nach einem der Ansprüche 2 bis 4, bei dem, wenn keine der Aktionen ausführbar ist, das Steuermodul (14) ausgebildet ist, um:
- das Mehrfachdetektionsmodul (23) zu aktivieren und alle Einzeldetektionsmodule (131, 132) zu deaktivieren;
- ein Fehlersignal auszusenden, falls ein Schlüsselwort von dem Mehrfachdetektionsmodul (23) detektiert wird.

7. Sprachassistent nach einem der vorhergehenden Ansprüche, bei dem das Steuermodul (14) ausgebildet ist, zu verifizieren, ob die entfernten Ausrüstungen (2, 4) durch die Ports der elektronischen Verarbeitungseinheit (1) erreichbar sind, und jede Aktion, die von einer der entfernten Ausrüstungen (2, 4) ausgeführt werden soll, als nicht ausführbar zu erachten, falls dieses Peripheriegerät nicht erreichbar ist.

8. Sprachassistent nach einem der vorhergehenden Ansprüche, bei dem einer der Ports der elektronischen Verarbeitungseinheit (1) mit einem Netzwerk (5) verbunden ist und das Steuermodul (14) ausgebildet ist, um:
- zu verifizieren, ob ein Server (3) dieses Netzwerkes (5) zugänglich ist;
- jede Aktion, die von diesem Server (5) ausgeführt werden soll, als nicht ausführbar zu erachten, falls dieser nicht zugänglich ist.

9. Sprachassistent nach einem der vorhergehenden Ansprüche, bei dem die elektronische Verarbeitungseinheit (1) ein Audioverarbeitungsmodul (12) zwischen dem Mikrofon (11) und den Detektionsmodulen (131, 132, 23) umfasst.

10. Sprachassistent nach Anspruch 7, bei dem das Audioverarbeitungsmodul (12) ausgebildet ist, das Audiosignal zu entzerren.

11. Sprachssistent nach Anspruch 7, bei dem das Audioverarbeitungsmodul (12) ausgebildet ist, ein Rauschen in dem Audiosignal zu unterdrücken.

12. Sprachassistent nach Anspruch 7, bei dem das Audioverarbeitungsmodul (12) ausgebildet ist, ein Echo des Audiosignals auszulöschen.

13. Sprachassistent nach Anspruch 7, bei dem, wenn das elektronische Verarbeitungsmodul (1) mit mehreren Mikrofonen (11) verbunden ist, das Audioverarbeitungsmodul (12) ausgebildet ist, die Audiosignale zu verarbeiten, um einen Ton, der aus einer bestimmten Richtung kommt, zu isolieren.

14. Sprachassistent nach einem der vorhergehenden Ansprüche, bei dem die Einzelerkennungsmodule (131, 132) eine identische Struktur mit unterschiedlichen Funktionsparametern haben, die an jedes Schlüsselwort angepasst sind.

15. Verfahren zum Steuern eines Sprachassistenten, der mit entfernten Ausrüstungen (2, 4) verbunden ist und eine elektronische Verarbeitungseinheit (1) umfasst, die Einzeldetektionsmodule (131, 132) zur Einzeldetektion von Schlüsselwörtern in einem Audiosignal und eine Steuereinheit (14) umfasst, die mit den Einzeldetektionsmodulen (131, 132) verbunden ist, wobei das Verfahren den Schritt des Auswählens von vorbestimmten Aktionen in Abhängigkeit von Detektionssignalen umfasst, die von den Einzeldetektionsmodulen (131, 132) geliefert werden, und um diese Aktionen auszuführen, wobei das Verfahren ferner die Schritte umfasst:
- Detektieren einer Ausführbarkeit der Aktionen,
- Aktivieren und Deaktivieren der Einzeldetektionsmodule (131, 132) in Abhängigkeit von der Ausführbarkeit der Aktionen.

16. Verfahren nach Anspruch 15, bei dem das elektronische Steuermodul (14) ferner ein Mehrfachdetektionsmodul (23) zur Mehrfachdetektion von Schlüsselwörtern umfasst und das Verfahren die Schritte umfasst:
- falls das Mehrfachdetektionsmodul (23) ausgebildet ist, die Schlüsselwörter von allen vorbestimmten Aktionen zu detektieren und falls es ein Einzeldetektionsmodul (131, 132) pro vorbestimmte Aktion gibt:
· wenn alle Aktionen ausführbar sind, Aktivieren des Mehrfachdetektionsmoduls (23) und Deaktivieren aller Einzeldetektionsmodule (131, 132);
· wenn nur ein Teil der Aktionen ausführbar ist, Aktivieren des bzw. der Einzeldetektionsmodule (131, 132) zur Einzeldetektion des bzw. der Schlüsselwörter, die der bzw. den ausführbaren Aktionen entsprechen, und Deaktivieren des Mehrfachdetektionsmoduls (23),
- falls mindestens eine der vorbestimmten Aktionen mit einem Schlüsselwort verbunden ist, das nur von dem Mehrfachdetektionsmodul (23) detektierbar ist, das Steuermodul (14) ausgebildet ist, um
· wenn alle Aktionen ausführbar sind, das Mehrfachdetektionsmodul (23) zu aktivieren und alle Einzeldetektionsmodule (131, 132) zu deaktivieren;
· wenn nur ein Teil der Aktionen ausführbar ist, das bzw. die Einzeldetektionsmodule (131, 132) zur Einzeldetektion des bzw. der Schlüsselwörter, die der bzw. den ausführen Aktionen entsprechen, und/oder das Mehrfachdetektionsmodul (23) zu aktivieren, falls eine der ausführbaren Aktionen mit einem Schlüsselwort verbunden ist, das nur von dem Mehrfachdetektionsmodul (23) detektierbar ist.

17. Verfahren nach Anspruch 15 oder 16, umfassend den Schritt des Deaktivierens aller Detektionsmodule (131, 132, 23), wenn keine der Aktionen ausführbar ist.

18. Verfahren nach Anspruch 15 oder 16, umfassend, wenn keine der Aktionen ausführbar ist, die Schritte:
- Aktivieren des Mehrfachdetektionsmoduls (23) und Deaktivieren aller Einzeldetektionsmodule (131, 132);
- Aussenden eines Fehlersignals, falls ein Schlüsselwort von dem Mehrfachdetektionsmodul (23) detektiert wird.

19. Verfahren nach einem der Ansprüche 15 bis 18, umfassend die Schritte des Verifizierens, ob die entfernten Ausrüstungen (2, 4) durch die elektronische Verarbeitungseinheit (1) erreichbar sind, und des Erachtens jeder Aktion, die von einer der entfernten Ausrüstungen (2, 4) durchgeführt werden soll, als nicht ausführbar, falls dieses Peripheriegerät nicht erreichbar ist.

20. Verfahren nach einem der Ansprüche 15 bis 19, bei dem die elektronische Verarbeitungseinheit (1) mit einem Netzwerk (5) verbunden ist, und das Verfahren die Schritte umfasst:
- Verifizieren, ob ein Server (3) dieses Netzwerkes (5) zugänglich ist;
- und Erachten jeder Aktion, die von diesem Server (5) durchgeführt werden soll, als nicht ausführbar, wenn dieser nicht zugänglich ist.

21. Verfahren nach einem der Ansprüche 15 bis 20, umfassend, vor der Detektion von Schlüsselwörtern, einen Schritt der Verbesserung des Audiosignals.

22. Verfahren nach Anspruch 21, bei dem der Schritt der Verbesserung des Audiosignals mindestens einen der folgenden Vorgänge umfasst:
- Entzerren des Audiosignals;
- Unterdrücken eines Rauschens des Audiosignals;
- Auslöschen eines Echos des Audiosignals;
- Verarbeiten mehrerer Audiosignale, um einen Ton, der aus einer bestimmten Richtung kommt, zu isolieren.

23. Computerprogramm, das ausgebildet ist, von einer Verarbeitungseinheit eines Sprachassistenten ausgeführt zu werden, umfassend Anweisungen, die ausgebildet sind, das Verfahren nach einem der Ansprüche 15 bis 21 durchzuführen.

24. Aufzeichnungsträger, der ein Computerprogramm nach Anspruch 23 enthält.

## Claims

1. A voice assistant comprising an electronic processor unit (1) having a connection port connected to at least one microphone (11) and at least one connection port connected to pieces of remote equipment (2, 4), the electronic processor unit (1) comprising both single detection modules (131, 132) for detecting respective single keywords from an audio signal supplied by the microphone (11) to the electronic processor unit (1) and also a control unit (14) connected to the single detection modules (131, 132) to select predetermined actions as a function of detection signals supplied by the single detection modules (131, 132) and to perform those actions, the control module (14) also being arranged:
- to detect whether actions are doable;
- to activate or deactivate the single detection modules (131, 132) as a function of the doability of the actions.

2. A voice assistant according to claim 1, wherein the electronic control unit (14) also comprises a multiple detection module (23) for detecting multiple keywords.

3. A voice assistant according to claim 2, wherein, if the multiple detection module (23) is arranged to detect the keywords of all of the predetermined actions, and if there is a respective single detection module (131, 132) for each predetermined action, then the control module (14) is arranged:
- when all of the actions are doable, to activate the multiple detection module (23) and deactivate all of the single detection modules (131, 132);
- when only some of the actions are doable, to activate the single detection module(s) (131, 132) for the keyword(s) corresponding to the doable action(s), and deactivate the multiple detection module (23).

4. A voice assistant according to claim 2, wherein, if at least one of the predetermined actions is associated with a keyword that is detectable solely by the multiple detection module (23), the control module (14) is arranged:
- when all of the actions are doable, to activate the multiple detection module (23) and deactivate all of the single detection modules (131, 132);
- when only some of the actions are doable, to activate the single detection module(s) (131, 132) for the keyword(s) corresponding to the doable action(s) and/or the multiple detection module (23) if one of the doable actions is associated with a keyword that can be detected solely by the multiple detection module (23).

5. A voice assistant according to any one of claims 2 to 4, wherein, when none of the actions is doable, the control module (14) is arranged to deactivate all of the detection modules (131, 132, 23).

6. A voice assistant according to any one of claims 2 to 4, wherein, when none of the actions is doable, the control module (14) is arranged:
- to activate the multiple detection module (23) and deactivate all of the single detection modules (131, 132);
- to issue an error signal if a keyword is detected by the multiple detection module (23).

7. A voice assistant according to any preceding claim wherein the control module (14) is arranged to verify that the pieces of remote equipment (2, 4) are reachable via the ports of the electronic processor unit (1) and to consider any action that is to be performed via a piece of remote equipment (2, 4) is not doable if that peripheral is not reachable.

8. A voice assistant according to any preceding claim wherein one of the ports of the electronic processor unit (1) is connected to a network (5) and the control module (14) is arranged:
- to verify whether a server (3) of the network (5) is accessible;
- to consider any action that is to be performed by that server (5) is not doable if the server is not accessible.

9. A voice assistant according to any preceding claim wherein the electronic processor unit (1) includes an audio processor module (12) between the microphone (11) and the detection modules (131, 132, 23).

10. A voice assistant according to claim 7, wherein the audio processor module (12) is arranged to equalize the audio signal.

11. A voice assistant according to claim 7, wherein the audio processor module (12) is arranged to suppress noise in the audio signal.

12. A voice assistant according to claim 7, wherein the audio processor module (12) is arranged to cancel echoes in the audio signal.

13. A voice assistant according to claim 7, wherein, the electronic processor unit (1) is connected to a plurality of microphones (11), and the audio processor module (12) is arranged to process the audio signals so as to isolate sound coming from a particular direction.

14. A voice assistant according to any preceding claim wherein the single detection modules (131, 132) are identical in structure with operating settings that are different and adapted to each keyword.

15. A method of controlling a voice assistant that is connected to pieces of remote equipment (2, 4) and that comprises both an electronic processor unit (1) comprising single detection modules (131, 132) for detecting respective single keywords in an audio signal and also a control unit (14) connected to the single detection modules (131, 132), the method comprising the step of selecting predetermined actions as a function of detection signals supplied by the single detection modules (131, 132) and of performing those actions, the method further comprising the steps of:
- detecting whether actions are doable;
- activating or deactivating the single detection modules (131, 132) as a function of the doability of the actions.

16. A method according to claim 15, wherein the electronic control unit (14) also comprises a multiple detection module (23) for detecting multiple keywords and the method comprises the steps of:
- if the multiple detection module (23) is arranged to detect the keywords of all of the predetermined actions, and if there is a respective single detection module (131, 132) for each predetermined action:
· when all of the actions are doable, activating the multiple detection module (23) and deactivating all of the single detection modules (131, 132);
· when only some of the predetermined actions are doable, activating the single detection module(s) (131, 132) for the keyword(s) corresponding to the doable action(s), and deactivating the multiple detection module (23) .
- if at least one of the predetermined actions is associated with a keyword that can be detected solely by the multiple detection module (23), the control module (14) is arranged:
· when all of the actions are doable, to activate the multiple detection module (23) and deactivate all of the single detection modules (131, 132);
· when only some of the actions are doable, to activate the single detection module(s) (131, 132) for the keyword(s) corresponding to the doable action(s) and/or the multiple detection module (23) if one of the doable actions is associated with a keyword that can be detected solely by the multiple detection module (23).

17. A method according to claim 15 or claim 16, including the step of deactivating all of the detection modules (131, 132, 23) when none of the actions is doable.

18. A method according to claim 15 or claim 16, including, when none of the actions is doable, the steps of:
- activating the multiple detection module (23) and deactivating all of the single detection modules (131, 132);
- issuing an error signal if a keyword is detected by the multiple detection module (23).

19. A method according to any one of claims 15 to 18, including the steps of verifying that the pieces of remote equipment (2, 4) are reachable by the electronic processor unit (1), and of considering that any action that is to be performed via a piece of remote equipment (2, 4) is not doable if that peripheral is not reachable.

20. A method according to any one of claims 15 to 19, wherein the electronic processor unit (1) is connected to a network (5), and the method includes the steps of:
- verifying whether a server (3) of the network (5) is accessible;
- considering any action that is to be performed by that server (5) is not doable if the server is not accessible.

21. A method according to any one of claims 15 to 20, including a step of improving the audio signal prior to detecting keywords.

22. A method according to claim 21, wherein the step of improving the audio signal comprises at least one of the following operations:
- equalizing the audio signal;
- suppressing noise in the audio signal;
- cancelling echoes in the audio signal;
- processing a plurality of audio signals in order to isolate sound coming from a particular direction.

23. A computer program arranged to be executed by a processor unit of a voice assistant, the program including instructions arranged to perform the method according to any one of claims 15 to 21.

24. A storage medium containing a computer program according to claim 23.
